# EUROPÄISCHE PATENTSCHRIFT

(11) **EP 3 085 070 B1**
(45) Veröffentlichungstag und Bekanntmachung des Hinweises auf die Patenterteilung: **15.07.2020**
(21) Anmeldenummer: 14825286.9
(22) Anmeldetag: 16.12.2014
(51) Int. Cl.: H04N 5/225, G02B 27/58, G06T 3/40, H04N 5/232, H04N 5/369

(54) **MEHRKANALOPTIK-BILDAUFNAHMEVORRICHTUNG**
MULTICHANNEL OPTICS IMAGE CAPTURE APPARATUS
DISPOSITIF DE PRISE DE VUE AVEC UNE OPTIQUE À PLUSIEURS CANAUX

(30) Priorität: 19.12.2013 DE 102013226789
(43) Veröffentlichungstag der Anmeldung: 26.10.2016
(73) Patentinhaber: Fraunhofer-Gesellschaft zur Förderung der angewandten Forschung e.V., 80686 München (DE)
(72) Erfinder: OBERDÖRSTER, Alexander, 07749 Jena (DE)
(74) Vertreter: Schenk, Markus
(86) Internationale Anmeldenummer: PCT/EP2014/077997
(87) Internationale Veröffentlichungsnummer: WO 2015/091509

(56) Entgegenhaltungen:
- WO-A1-2013/076531
- US-A1- 2005 057 687
- US-A1- 2010 171 866
- US-A1- 2010 321 511
- US-A1- 2011 228 142
- US-A1- 2013 308 026
- US-B1- 6 183 089

## Beschreibung

Die Patentanmeldung bezieht sich auf eine Mehrkanaloptik-Bildaufnahmevorrichtung, bei der zumindest ein erster Kanal mit einem zweiten Kanal eine zumindest teilweise Gesichtsfeldüberlappung aufweist.

Es existieren Mehrkanaloptik-Bildaufnahmevorrichtungen ([1], [2], [3]), die anstelle einer einzelnen Linse eine Abbildungsoptik aus nebeneinander angeordneten optischen Kanälen verwenden. Die in den Kanälen erzeugten Einzelbilder werden getrennt aufgezeichnet und elektronisch zu einem Gesamtbild kombiniert. Einige mehrkanalige Systeme arbeiten mit Überdeckung, d.h. ein Gesichtsfeldbereich wird von mehreren Kanälen abgebildet. Daraus ergibt sich eine Redundanz, die zur Gewinnung von Zusatzinformationen, wie beispielsweise Tiefenkarten, genutzt werden kann.

Eine solche Redundanz reduziert jedoch auch die Gesamtauflösung der Bildaufnahmevorrichtung. Daher werden die Blickrichtungen der Kanäle in einigen Fällen so eingestellt, dass die Abtastmuster zweier Kanäle auf einem abzubildenden Objekt oder Objektteil gegeneinander verstimmt sind. Ein zweiter Kanal trägt also nicht nur durch seinen anderen Standpunkt weitere Informationen zum Gesamtbild bei, sondern auch durch Verfeinerung der Abtastung. Bei entsprechender Leistung der Mehrkanaloptik und Nachverarbeitung der von den Kanälen gesammelten Daten führt dies auch zu einer höheren Auflösung des aus den Einzelbildern rekonstruierten Gesamtbildes, Überauflösung oder Superresolution genannt.

Da benachbarte Kanäle auf dem Sensor lateral versetzt angeordnet sind, weisen sie häufig eine Parallaxe auf, so dass ein Objekt je nach Entfernung unter verschiedenen Winkeln erscheint. Durch diese Parallaxe ist die Verstimmung der Abtastmuster entfernungsabhängig. Wenn zwei Kanäle im unendlichen Ideal verstimmt sind, so wird es dennoch Entfernungen geben, bei der die Abtastmuster dieser Kanäle nicht phasenverschoben sind, sondern exakt zur Deckung kommen. Eine Überauflösung entsteht in diesen Fällen nicht mehr.

Da die Auflösung der Bildaufnahmevorrichtung hinsichtlich des Gesamtbildes entfernungsabhängig ist, ergibt sich ein zusätzliches Problem. In einer einkanaligen Digitalkamera muss die Auflösung der Optik an die Abtastrate des Bildsensors angepasst sein, um eine Unterabtastung und ein damit verbundenes Aliasing zu vermeiden. Dies geschieht entweder durch die Auslegung der abbildenden Linsen selbst oder durch Einfügen eines sogenannten Anti-Aliasing-Filters, der auch optischer Tiefpass genannt wird. Wenn die Winkelauflösung, wie im obigen Fall, entfernungsabhängig ist, müsste die Tiefpasswirkung der Szene angepasst werden, und zwar für jeden Bildteil entsprechend seiner Entfernung. Dynamische, lokal adaptierbare optische Tiefpassfilter sind jedoch bislang nicht realisierbar.

Das Problem der entfernungsabhängigen Auflösung trifft nicht nur die oben beschriebene Anordnung, sondern auch andere Mehrkanaloptik-Bildaufnahmevorrichtungen, speziell auch solche, bei denen die Blickrichtung aller Kanäle gleich ist ([1], [2]). Es betrifft außerdem sogenannten plenoptische Kameras, die zur Abbildung eines Objekts ein herkömmliches Objektiv mit einer Mehrkanaloptik kombinieren ([4], [5]).

Zwar kann man bei Mehrkanaloptik-Aufnahmevorrichtungen vereinfachend von Abtastpunkten und Abtastmustern sprechen, tatsächlich jedoch misst ein Detektorpixel der Mehrkanaloptik-Aufnahmevorrichtungen nicht die Intensität an einem diskreten Punkt, sondern integriert über einen Raumwinkel. Das beschriebene Problem bleibt jedoch dasselbe: Je nach Objektentfernung überlagern sich Integrationsflächen von Detektorpixeln benachbarter Kanäle mehr oder weniger. Je geringer die Überdeckung, desto hochauflösender und robuster die Bildrekonstruktion des Gesamtbildes. Folglich ist die Auflösung des rekonstruierten Gesamtbildes auch bei dieser Betrachtung entfernungsabhängig.

Üblicherweise wurde das beschriebene Problem bisher hingenommen. Es entsteht bei Mehrkanaloptik-Bildaufnahmevorrichtungen, die mit Auflösungserhöhung durch überlagerte Blickfelder arbeiten. Diese Systeme sind gegenwärtig kaum verbreitet und bei herkömmlichen Einkanaloptik-Bildaufnahmevorrichtungen besteht das Problem nicht.

Ein möglicher existierender Lösungsansatz ist das Bereitstellen eines Kamera-Arrays, dessen Kanäle individuell gedreht sind [6]. So kann eine unregelmäßigere Abtastung erzeugt werden. Problematisch kann dabei sein, dass Arrays aus kompletten Kameras, also Sensor und Optik insgesamt, gegeneinander verdreht werden müssen, was die Bereitstellung einer Mehrkanaloptik-Bildaufnahmevorrichtung, die kompakt gebaut sein soll, erschwert. Außerdem kann der Nachteil entstehen, dass sich gegeneinander verdrehte Bildfelder nicht ohne Platzverschwendung nebeneinander platzieren lassen, wenn ein durchgehendes Sensorsubstrat für alle Kanäle verwendet wird.

Ferner existieren Penrose-Pixel, die eine spezielle Geometrie aufweisen, um pseudozufällige Abtastmuster zu erzeugen [7]. Sie werden für die Auflösungserhöhung mit einkanaligen Systemen eingesetzt. Die Überabtastung kann über Mehrfachaufnahmen und Verschiebung der Kamera zwischen Aufnahmen erfolgen. Für diese Lösung sind verschiedene Varianten von rautenförmigen Pixeln notwendig. Eine derartige Umsetzung würde bei Mehrkanaloptik-Bildaufnahmevorrichtungen erheblichen Aufwand für eine Neuentwicklung der Pixel und für die Verdrahtung der pseudozufälligen Pixelanordnung erfordern.

In US 2011/0228142 A1 ist eine optische Vorrichtung mit zumindest einem Mikrolinsenfeld mit zumindest zwei Mikrolinsen und einem Bildsensor mit zumindest zwei Bilderfassungsmatrizen beschrieben.

In US 2013/0308026 A1 ist eine Vorrichtung mit einem Kameramodul beschrieben, das eine anamorphotische Linse und einen Bildsensor aufweist, der ein Array von asymmetrischen Bildpixeln umfasst. Das Kameramodul kann eine oder mehrere anamorphotische Linsen aufweisen.

In US 2005/0057687 A1 ist ein System zum Erhöhen einer Raum- oder Zeitauflösung einer Bildsequenz beschrieben. Hierfür wird eine Kombination einer Vielzahl von Quellen mit verschiedenen Raum-Zeit-Auflösungen vorgeschlagen.

In WO 2103/076531 A1 ist eine Vorrichtung mit einem Strahlteiler zum Teilen eines Lichtstrahls beschrieben.

Entsprechend den voranstehenden Erläuterungen besteht ein Bedarf, Mehrkanaloptik-Bildaufnahmevorrichtungen zu schaffen, die die genannten Nachteile beseitigen. Insbesondere sollen Mehrkanaloptik-Bildaufnahmevorrichtungen geschaffen werden, deren Auflösung im Wesentlichen entfernungsunabhängig ist. Zudem sollen sie im Vergleich zu existierenden Lösungen einfacher herzustellen sein und kompakter gebaut werden können. Mittels derart verbesserter Mehrkanaloptik-Bildaufnahmevorrichtungen sollen Mehrkanaloptik-Bildaufnahmeverfahren ermöglicht werden, mit denen hochauflösendere Objektaufnahmen möglich sind, die von einem Abstand zwischen Mehrkanaloptik-Bildaufnahmevorrichtung und Objekt im Wesentlichen unabhängig sind.

Die Aufgabe der Erfindung wird durch die Mehrkanaloptik-Bildaufnahmevorrichtungen und die Mehrkanaloptik-Bildaufnahmeverfahren entsprechend den angehängten unabhängigen Patentansprüchen gelöst. Die davon jeweils abhängigen Patentansprüche beziehen sich auf Ausgestaltungen von Ausführungsformen der Erfindung. Die Bezugszeichen in den Ansprüchen und in der Beschreibung sollen ausschließlich die Lesbarkeit verbessern und keine beschränkende Wirkung entfalten.

Die beanspruchten Vorrichtungen und Verfahren ermöglichen, vergleichsweise hochauflösende und robuste Gesamtbilder aus von Kanälen der Mehrkanaloptik-Bildaufnahmevorrichtung aufgenommenen Einzelbildern zu erhalten. Die Auflösung des Gesamtbildes wird weitgehend entfernungsunabhängig, da die Kanäle ein verbessertes Abtastmuster für den Objektraum bereitstellen. Die Erfindung verhindert, dass sich beim Aufnehmen von Objekten in bestimmten Entfernungen Abtastpunkte der Kanäle häufen, so dass erfindungsgemäß eine relativ homogene Abtastung des Objektraums erreicht wird, deren Dichte ausreichend entfernungsunabhängig ist. Gleichzeitig wird zudem ermöglicht, relativ einfach herzustellende Anordnungen von Detektorpixeln zu wählen, so dass die Herstellung der Mehrkanaloptik-Bildaufnahmevorrichtungen vergleichsweise einfach und preiswert erfolgen kann. Weitere Vorteile der Erfindung werden im Folgenden anhand von Ausführungsformen der Erfindung erläutert, die Teil der abhängigen Ansprüche sind.

Ausführungsbeispiele schaffen eine Mehrkanaloptik-Bildaufnahmevorrichtung, bei der zumindest ein erster Kanal eine anamorphotische Abbildungsoptik aufweist und der erste Kanal zumindest mit einem zweiten Kanal eine zumindest teilweise Gesichtsfeldüberlappung aufweist. Alle Kanäle umfassen eine zweidimensionale Anordnung von Detektorpixeln, die je Kanal eine Pixelmatrix aus Pixelzeilen und Pixelspalten bilden, wobei die Pixelzeilen und Pixelspalten jedes Kanals jeweils zueinander senkrecht angeordnet sind. Alle Kanäle sind in einer Kanalmatrix aus zueinander senkrechten Kanalzeilen und Kanalspalten angeordnet, und die anamorphotische Abbildungsoptik ist dafür eingerichtet, ein abzubildendes Objekt auf jedem Kanal mit einer dem jeweiligen Kanal, hinsichtlich allen anderen Kanälen, eindeutig zuordenbarer Verzerrung in einem Seitenverhältnis 1:1,05 oder mehr abzubilden.

Ausführungsbeispiele schaffen eine Mehrkanaloptik-Bildaufnahmevorrichtung, bei der zumindest ein erster Kanal eine anamorphotische Abbildungsoptik aufweist und der erste Kanal zumindest mit einem zweiten Kanal eine zumindest teilweise Gesichtsfeldüberlappung aufweist. Eine Verzerrung der anamorphotischen Abbildungsoptik des ersten Kanals ist so ausgebildet, dass ein Abbild eines Objekts in dem ersten Kanal ein erstes Seitenverhältnis und in dem zweiten Kanal ein zweites Seitenverhältnis aufweist, wobei das erste Seitenverhältnis dem ersten Kanal eindeutig zugeordnet ist und das zweite Seitenverhältnis dem zweiten Kanal eindeutig zugeordnet ist, so dass auf jeden Kanal ein im Vergleich mit den anderen Kanälen unterschiedlich verzerrtes Abbild des aufzunehmenden Objekts aufgenommen wird.

Ausführungsbeispiele schaffen ein Mehrkanaloptik-Bildaufnahmeverfahren, bei dem ein aufzunehmendes Objekt mit einer Mehrkanal-Bildaufnahmevorrichtung aufgenommen wird, bei der zumindest ein erster Kanal eine anamorphotische Abbildungsoptik aufweist und der erste Kanal zumindest mit einem zweiten Kanal eine zumindest teilweise Gesichtsfeldüberlappung aufweist. Alle Kanäle der Mehrkanal-Bildaufnahmevorrichtung eine zweidimensionale Anordnung von Detektorpixeln umfassen, die je Kanal eine Pixelmatrix aus Pixelzeilen und Pixelspalten bilden. Die Pixelzeilen und Pixelspalten jedes Kanals sind jeweils zueinander senkrecht angeordnet. Alle Kanäle sind in einer Kanalmatrix aus zueinander senkrechten Kanalzeilen und Kanalspalten angeordnet, und die anamorphotische Abbildungsoptik ist dafür eingerichtet, ein abzubildendes Objekt auf jedem Kanal mit einer dem jeweiligen Kanal, hinsichtlich allen anderen Kanälen, eindeutig zuordenbarer Verzerrung in einem Seitenverhältnis 1:1,05 oder mehr abzubilden.

Ausführungsbeispiele schaffen ein Mehrkanaloptik-Bildaufnahmeverfahren, bei dem ein aufzunehmendes Objekt mit einer Mehrkanal-Bildaufnahmevorrichtung aufgenommen wird, bei der zumindest ein erster Kanal eine anamorphotische Abbildungsoptik aufweist und der erste Kanal zumindest mit einem zweiten Kanal eine zumindest teilweise Gesichtsfeldüberlappung aufweist. Eine Verzerrung der anamorphotischen Abbildungsoptik des ersten Kanals ist so ausgebildet, dass ein Abbild eines Objekts in dem ersten Kanal ein erstes Seitenverhältnis und in dem zweiten Kanal ein zweites Seitenverhältnis aufweist, wobei das erste Seitenverhältnis dem ersten Kanal eindeutig zugeordnet ist und das zweite Seitenverhältnis dem zweiten Kanal eindeutig zugeordnet ist, so dass auf jeden Kanal ein im Vergleich mit den anderen Kanälen unterschiedlich verzerrtes Abbild des aufzunehmenden Objekts aufgenommen wird.

In Ausführungsformen der Erfindung ist vorgesehen, dass jeder Kanal der Mehrkanaloptik-Bildaufnahmevorrichtung eine zweidimensionale Anordnung von Detektorpixeln und eine Abbildungsoptik, die dafür eingerichtet ist, eine Abbildung auf die Anordnung von Detektorpixeln zu bewirken, aufweist. Auf diese Weise können alle Kanäle in vergleichbaren Herstellungsverfahren erstellt werden, so dass eine kostengünstige Produktion möglich wird. Außerdem ermöglicht die zweidimensionale Anordnung der Detektorpixel eine kompakte Bauform. Es können aber auch nur einer oder einige der Kanäle, beispielsweise zwei Kanäle, eine zweidimensionale Anordnung von Detektorpixeln und eine Abbildungsoptik, die dafür eingerichtet ist, eine Abbildung auf die Anordnung von Detektorpixeln zu bewirken, aufweisen, wenn der Anwendungszweck eine solche Ausgestaltung erfordert. Die zweidimensionale Anordnung ist vorzugsweise bei allen Kanälen in einer Ebene angeordnet, kann aber auch bei einem oder mehreren Kanälen sich konkav oder konvex wölbend, bezogen auf die Blickrichtung des derart ausgebildeten Kanals, angeordnet sein.

In manchen Ausführungsformen ist vorgesehen, dass sich die Gesichtsfelder von zwei oder mehr Kanälen teilweise überlappen. So kann eine höhere Auflösung des aus den Einzelbildern der einzelnen Kanäle zusammengesetzten Gesamtbildes erreicht werden. In einigen Ausführungsformen ist vorgesehen, dass sich die Gesichtsfelder zweier Kanäle zu mehr als 30% überlappen. In manchen Ausführungsformen überlappen sich die Gesichtsfelder aller Kanäle teilweise. Einige Ausführungsformen der Erfindung zeichnen sich dadurch aus, dass sich die Gesichtsfelder von zwei oder mehr Kanälen vollständig überlappen. So kann eine besonders hohe lokale Auflösung erreicht werden. Es sind auch Ausführungsformen vorgesehen, bei der sich die Gesichtsfelder aller Kanäle vollständig überlappen. In anderen Ausführungsformen überlappen sich die Gesichtsfelder zweier benachbarter Kanäle vollständig.

Bei manchen Ausführungsformen der vorliegenden Erfindung weist die anamorphotische Abbildungsoptik eine oder mehrere Mikrolinsen auf, die dafür eingerichtet sind, ein abzubildendes Objekt in einem Seitenverhältnis 1:1,05 oder mehr auf einer Anordnung von Detektorpixeln des ersten Kanals verzerrt abzubilden. So kann sich eine besonders günstige und einfache Lösung ergeben, mit Hilfe der die Auflösungserhöhung bei Mehrkanaloptik-Bildaufnahmevorrichtungen entfernungsunabhängig eingerichtet werden kann. Ein besonderer Vorteil dieser Ausführungsform kann sich daraus ergeben, dass allgemein bekannte, in einer Aufsicht entlang einer Detektionsrichtung rechteckig und zudem quadratisch geformte Pixel zur Bildaufnahme verwendet werden können, so dass eine besonders kostengünstige Herstellung einer Mehrkanaloptik-Bildaufnahmevorrichtung ermöglicht werden kann.

In Ausführungsformen der Erfindung ist vorgesehen, dass alle Kanäle eine zweidimensionale Anordnung von Detektorpixeln umfassen, die je Kanal eine Pixelmatrix aus Pixelzeilen und Pixelspalten bilden, wobei die Pixelzeilen und Pixelspalten jedes Kanals zueinander senkrecht angeordnet sind, und alle Kanäle in einer Kanalmatrix aus zueinander senkrechten Kanalzeilen und Kanalspalten angeordnet sind, und die anamorphotische Abbildungsoptik dafür eingerichtet ist, ein abzubildendes Objekt auf jedem Kanal mit einer dem jeweiligen Kanal, hinsichtlich allen anderen Kanälen, eindeutig zuordenbarer Verzerrung in einem Seitenverhältnis 1:1,05 oder mehr abzubilden. So kann erreicht werden, dass auf jeden Kanal ein im Vergleich mit den anderen Kanälen unterschiedlich verzerrtes Abbild des aufzunehmenden Objekts aufgenommen werden kann. Auf diese Weise kann man besonders günstig verhindern, dass sich in einer bestimmten Entfernung das Abtastmuster der Kanäle häuft, weil die Abbildungsoptik auf jedem Kanal ein anderes Abbild des Objekts abbilden kann. Ein entfernungsabhängiger Auflösungsverlust wird somit reduziert oder verhindert. Stattdessen wird erreicht, dass das Abtastmuster unabhängig von der Entfernung relativ homogen bleibt und eine entfernungsunabhängige Abtastung des Objektraums mit gleichbleibend ausreichender Dichte ermöglicht.

Ausführungsbeispiele der Erfindung sind in den beigefügten Figuren dargestellt.

Die Figuren zeigen:
Fig. 1a) und 1b) eine eindimensionale Veranschaulichung eines Strahlengangs mit Parallaxeneffekt bei einer Mehrkanaloptik-Bildaufnahmevorrichtung (Stand der Technik);
Fig. 2 eine Aufsicht einer Ausführungsform der vorliegenden Erfindung nach Anspruch 1 in einer Mehrkanaloptik-Bildaufnahmevorrichtung;
Fig. 3 eine Aufsicht einer ersten Ausführungsform der vorliegenden Erfindung nach Anspruch 11 in einer Mehrkanaloptik-Bildaufnahmevorrichtung, die eine plenoptische Kamera ist; und
Fig. 4 eine Aufsicht einer zweiten Ausführungsform der vorliegenden Erfindung nach Anspruch 11 in einer Mehrkanaloptik-Bildaufnahmevorrichtung.

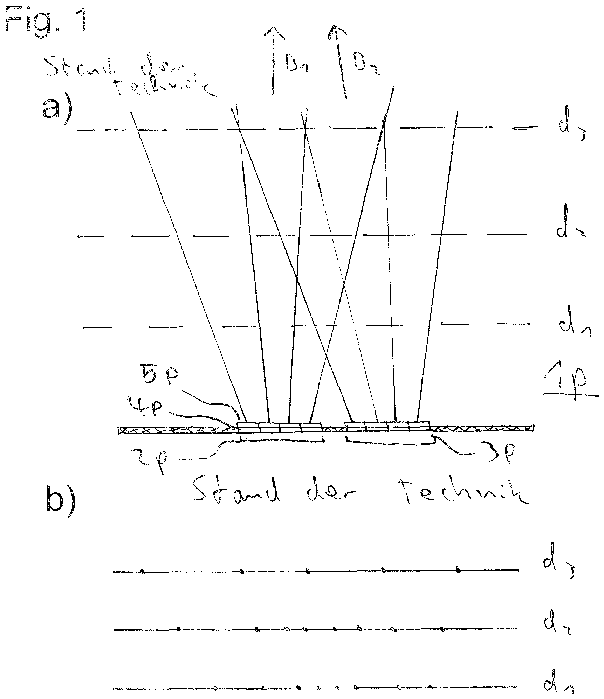

Im Folgenden wird die Erfindung unter Verweis auf die oben aufgeführten Figuren 1 bis 4 erläutert. Die Erfindung ist jedoch nicht auf die dargestellten Ausführungsbeispiele beschränkt. Gleiche Bezugszeichen in unterschiedlichen Ausführungsformen beschreiben vergleichbare Elemente.

Fig. 1 zeigt einen Strahlengang mit Parallaxeneffekt bei einer Mehrkanaloptik-Bildaufnahmevorrichtung 1p. Die Mehrkanaloptik-Bildaufnahmevorrichtung 1p ist dafür eingerichtet, aus Einzelbildern mehrerer Kanäle 2p, 3p ein Gesamtbild zu erstellen. Zu sehen sind in Fig. 1a ein erster Kanal 2p und ein zweiter Kanal 3p, wobei der erste Kanal 2p eine erste zweidimensionale Anordnung von Detektorpixeln 4p und der zweite Kanal 3p eine zweite zweidimensionale Anordnung von Detektorpixeln 4p aufweist. Der erste Kanal 2p umfasst vier Detektorpixel 4p und der zweite Kanal 3p umfasst vier Detektorpixel 4p. Die Detektorpixel 4p sind jeweils quadratisch geformt und jeweils in gleicher Weise regelmäßig nebeneinander in jedem Kanal 2p, 3p angeordnet. Der erste Kanal 2p und der zweite Kanal 3p weisen zudem jeweils eine Abbildungsoptik 5p auf, die dafür eingerichtet ist, eine Abbildung auf die Anordnung von Detektorpixel 4p zu bewirken. Die Abbildungsoptik 5p umfasst für jeden Detektorpixel 4p eine Mikrolinse, die jeweils dafür eingerichtet ist, ein abzubildendes Objekt in einem Seitenverhältnis von 1:1, also unverzerrt, auf dem darunter angeordneten Detektorpixel 4p abzubilden. Der erste Kanal 2p und der zweite Kanal 3p weisen unterschiedliche Blickrichtungen B₁ und B₂ auf, so dass das Gesichtsfeld des ersten Kanals 2p im Objektraum vollständig mit dem Gesichtsfeld des zweiten Kanals 3p überlappt.

Durch die jeweils identische regelmäßige Anordnung der Detektorpixel 4p und die Abbildungsoptiken 5p, die ein abzubildendes Objekt im Seitenverhältnis 1:1 auf den Detektorpixeln 4p abbilden, ist die Auflösung des Gesamtbildes gemäß Figur 1b) entfernungsabhängig. Der erste Kanal 2p und der zweite Kanal 3p können mit ihren jeweils vier Detektorpixeln 4p ein aufzunehmendes Objekt an maximal acht Abtastbereichen abtasten. Es kann also gegenüber einer Einkanaloptik-Bildaufnahmevorrichtung in Entfernungen d1 und d2 ein Supersampling des aufzunehmenden Objekts mit bis zu acht statt mit höchstens vier Abtastbereichen erfolgen. In einer Entfernung d3 überlagern sich die Abtastbereiche von Detektorpixeln 4p des ersten Kanals 2p jedoch mit Abtastbereichen von Detektorpixeln 4p des zweiten Kanals 3p. Es sind nur noch fünf Abtastbereiche vorhanden, so dass die Bildauflösung des Gesamtbilds gegenüber den Entfernungen d1 und d2 absinkt. Man spricht von einem Parallaxeneffekt. Dieser stellt ein Problem dar, denn es ist erwünscht, unabhängig von der Entfernung d eines aufzunehmenden Objekts eine optimale Ausnutzung aller möglichen Abtastbereiche der Detektorpixel 4p zu erreichen. Eine Überlagerung von Abtastbereichen soll also verringert oder ganz vermieden werden, um ein möglichst hoch aufgelöstes Gesamtbild erhalten zu können.

Die Erfindung schlägt als eine erste Lösung eine Mehrkanaloptik-Bildaufnahmevorrichtung 1 vor, bei der zumindest ein erster Kanal 2 eine anamorphotische Abbildungsoptik 5 aufweist und der erste Kanal 2 mit einem zweiten Kanal 3 eine zumindest teilweise Gesichtsfeldüberlappung aufweist. Die Erfindung schlägt als zweite Lösung eine Mehrkanaloptik-Bildaufnahmevorrichtung 1 vor, die zumindest einen ersten Kanal 2 und einen zweiten Kanal 3 aufweist, wobei der erste Kanal 2 mit dem zweiten Kanal 3 eine zumindest teilweise Gesichtsfeldüberlappung aufweist, und der erste Kanal 2 eine erste zweidimensionale Anordnung von Detektorpixeln 4 umfasst und der zweite Kanal 3 eine zweite zweidimensionale Anordnung von Detektorpixeln 4 umfasst und die erste zweidimensionale Anordnung gegenüber der zweiten zweidimensionalen Anordnung inkongruent ist. Dadurch wird jeweils erreicht, dass eine entfernungsabhängige Überlagerung von Abtastbereichen der Detektorpixel 4 verringert oder ganz vermieden wird, so dass das Gesamtbild, das aus den Einzelbildern der Kanäle 2, 3 gebildet wird, eine im Wesentlichen konstante Detailauflösung unabhängig von der Entfernung zum abzubildenden Objekt aufweist.

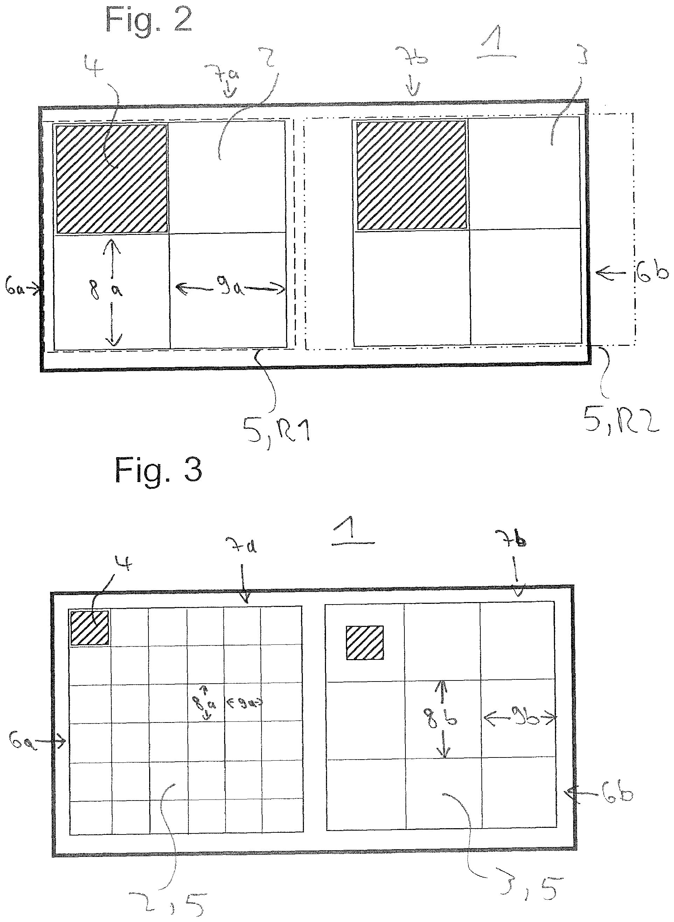

Eine Ausführungsform der Erfindung gemäß der ersten vorgeschlagenen Lösung ist in Fig. 2 dargestellt. Eine Mehrkanaloptik-Bildaufnahmevorrichtung 1 der dort in einer Aufsicht auf die Bildebene gezeigten Art weist einen ersten Kanal 2 und einen zweiten Kanal 3 auf. Der erste Kanal 2 und der zweite Kanal 3 weisen eine vollständige Gesichtsfeldüberlappung auf, da es sich bei der Mehrkanaloptik-Bildaufnahmevorrichtung 1 um eine plenoptische Kamera handelt, die zusätzlich eine weitere Linse aufweist, die der anamorphotischen Abbildungsoptik 5 vorgeschaltet ist. Weil der erste Kanal 2 und der zweite Kanal 3 jedoch unmittelbar benachbart angeordnet sind, weisen der erste Kanal 2 und der zweite Kanal 3 nur leicht unterschiedliche Blickrichtungen auf, die sich auf die Darstellung in Fig. 2 nicht auswirken. Der erste Kanal 2 und der zweite Kanal 3 bilden eine regelmäßige Kanalmatrix mit zwei Kanalspalten und einer Kanalzeile.

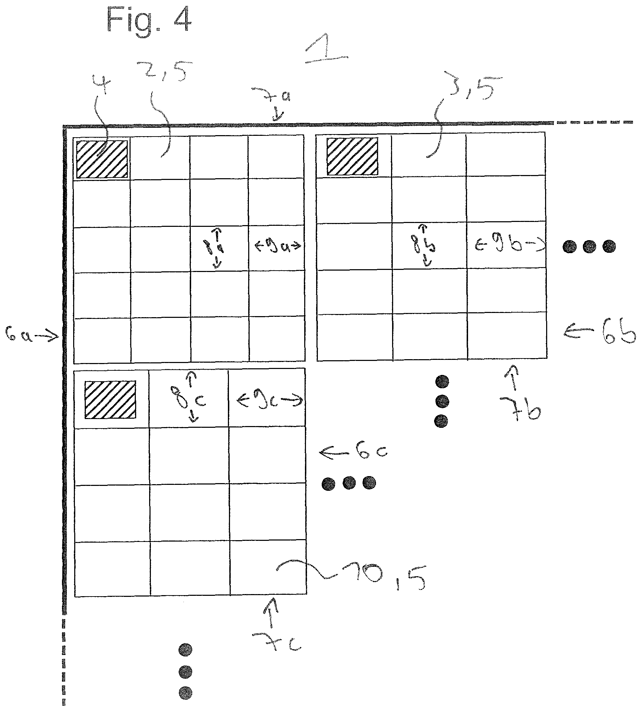

Der erste Kanal 2 weist gemäß Fig. 2 eine ebene erste zweidimensionale Anordnung von Detektorpixeln 4 auf und der zweite Kanal 3 weist eine ebene zweite zweidimensionale Anordnung von Detektorpixeln 4 auf. Sowohl im ersten Kanal 2 als auch im zweiten Kanal 3 sind exemplarisch jeweils nur ein Detektorpixel 4 dargestellt. Pixelzeilen 6a, 6b und Pixelspalten 7a, 7b enthalten jedoch weitere Detektorpixel 4, die nicht dargestellt sind und die voneinander gleichmäßig beabstandet sind, so dass die Pixelzeilen 6a, 6b und die Pixelspalten 7a, 7b gleichmäßig matrixförmig mit einem Detektorpixel 4 pro Feld der Matrix aus Pixelzeilen 6a, 6b und Pixelspalten 7a, 7b besetzt sind. Gleiches gilt analog für die Veranschaulichungen in den Figuren 3 und 4. Die Detektorpixel 4 sind in Fig. 2 in der Aufsicht quadratisch geformt und die erste zweidimensionale Anordnung von Detektorpixeln 4 ist gegenüber der zweiten zweidimensionalen Anordnung von Detektorpixeln 4 kongruent. Es ist jedoch unmittelbar offensichtlich, dass die erste zweidimensionale Anordnung von Detektorpixeln 4 gegenüber der zweiten zweidimensionalen Anordnung von Detektorpixeln 4 in vergleichbaren Ausführungsformen gemäß der ersten vorgeschlagenen Lösung statt dessen inkongruent sein kann.

Der erste Kanal 2 weist eine anamorphotische Abbildungsoptik 5 auf, die dafür eingerichtet ist, eine Abbildung auf die unter ihm angebrachte Anordnung von Detektorpixeln 4 zu bewirken. Der zweite Kanal 3 weist eine anamorphotische Abbildungsoptik 5 auf, die dafür eingerichtet ist, eine Abbildung auf die unter ihm angebrachte Anordnung von Detektorpixeln 4 zu bewirken. Die gestrichelt dargestellten Rechtecke R1 und R2 verdeutlichen, wie die anamorphotische Abbildungsoptik 5 ein abzubildendes Objekt, in diesem Fall ein quadratischer Gegenstand, der in der Realität ein Seitenverhältnis 1:1 aufweist, jeweils auf dem ersten Kanal 2 und auf dem zweiten Kanal 3 abbildet. Die anamorphotische Abbildungsoptik 5 weist eine Mikrolinse auf, die dafür eingerichtet ist, ein abzubildendes Objekt in einem Seitenverhältnis von 1:1,05 oder mehr auf der Anordnung von Detektorpixeln 4 des ersten Kanals 2 verzerrt abzubilden. Die Verzerrung oder Änderung der Verzerrung gegenüber einer durch eine weitere für den jeweiligen Kanal wirksamen Verzerrung kann dabei vorteilhafterweise für den gesamten Kanal gleich, homogen oder zumindest kontinuierlich veränderlich wirksam sein. Deshalb wird der abzubildende quadratische Gegenstand, wie durch R1 veranschaulicht, als rechteckiger Gegenstand mit dem Seitenverhältnis von 1:1,05 oder mehr, genauer 1:1,1, abgebildet. Die anamorphotische Abbildungsoptik 5 weist zudem eine Mikrolinse auf, die dafür eingerichtet ist, das abzubildende Objekt in einem **Seitenverhältnis** von 1:1,4 auf der Anordnung von Detektorpixeln 4 des zweiten Kanals 3 verzerrt abzubilden. Deshalb wird der abzubildende quadratische Gegenstand, wie durch R2 veranschaulicht, als rechteckiger Gegenstand mit dem Seitenverhältnis von 1:1,4 abgebildet. Die Mikrolinsen erreichen dies, indem sie mit einer zylindrischen Oberfläche versehen sind. Die anamorphotische Abbildungsoptik 5 jedes Kanals ist dementsprechend dafür eingerichtet, ein abzubildendes Objekt auf jedem Kanal 2, 3 mit einer dem jeweiligen Kanal 2, 3, hinsichtlich dem anderen Kanal 2, 3, eindeutig zuordenbarer Verzerrung in einem Seitenverhältnis 1:1,05 oder mehr abzubilden. In der dargestellten Ausführungsform gemäß Fig. 2 umfassen somit alle Kanäle 2, 3 eine zweidimensionale Anordnung von Detektorpixeln 4, die je Kanal 2, 3 eine Pixelmatrix aus Pixelzeilen 6a, 6b und Pixelspalten 7a, 7b bilden, wobei die Pixelzeilen 6a und Pixelspalten 7a jedes Kanals 2, 3 jeweils zueinander senkrecht angeordnet sind, und alle Kanäle 2, 3 in einer Kanalmatrix aus zueinander senkrechten Kanalzeilen und Kanalspalten angeordnet sind, und die anamorphotische Abbildungsoptik 5 dafür eingerichtet ist, ein abzubildendes Objekt auf jedem Kanal 2, 3 mit einer dem jeweiligen Kanal 2, 3, hinsichtlich aller anderen Kanälen 2, 3, eindeutig zuordenbarer Verzerrung in einem Seitenverhältnis 1:1,05 oder mehr abzubilden.

Durch die anhand von Fig. 2 veranschaulichte erste Lösung werden über den ersten Kanal 2 andere optische Details über das aufzunehmende Objekt aufgenommen als über den zweiten Kanal 3. Durch eine geeignete Umrechnung der jeweiligen Kanalinformationen erhält man ein Gesamtbild, das entfernungsunabhängig eine hohe Auflösung aufweist, da der erste Kanal 2 und der zweite Kanal 3 über die anamorphotische Abbildungsoptik 5 jeweils unterschiedliche optische Informationen über das abzubildende Objekt aufnehmen können. Die anamorphotische Abbildungsoptik 5 kann bspw. nur in einem Kanal angeordnet sein oder anders ausgedrückt, kann die Abbildungsoptik eines Kanals nicht-anamorphotisch sein. Bezüglich des ersten Kanals wird beispielsweise keine Änderung der Verzerrung durch die jeweilige anamorphotische Abbildungsoptik bewirkt und bezüglich des zweiten Kanals 3 wird eine Änderung der Verzerrung durch die jeweilige Abbildungsoptik bewirkt wird. In diesem Fall kann die bewirkte Verzerrung und/oder das zugehörige Seitenverhältnis dem zweiten Kanal 3 zugeordnet werden. Alternativ oder zusätzlich kann die nicht bewirkte Verzerrung, etwa mittels eines Seitenverhältnisses von 1:1, dem ersten Kanal 2 zugeordnet werden. Wie es oben ausgeführt ist, kann die Abbildungsoptik, die jeweils für den gesamten Kanal eine wirksame Abbildung bewirkt, bezüglich beider, mehrerer oder aller Kanäle anamorphotisch sein. Gemäß einem Ausführungsbeispiel weist jedenfalls am Ende die in der Bildebene der jeweiligen Abbildungsoptik liegende Anordnung der Bilder der in der Objektebene der jeweiligen Abbildungsoptik befindlichen Pixel ein kanalindividuelles Seitenverhältnis von beispielsweise einem horizontalen Pixelmittenabstand zu einem vertikalen Pixelmittenabstand auf, d.h. das Seitenverhältnis ist unter den Kanälen verschieden, d. h. unterscheidet zwischen Kanälen, wodurch sich wie beschrieben das Intervall von Objektabständen erhöht, innerhalb dessen ein Aufeinanderliegen der bildebenseitigen Pixelbilder verschiedener Kanäle vermieden wird. Eine objektebenseitiges Variieren der Bildpunktseitenverhältnisse zwischen Kanälen ist ebenfalls möglich und ist Gegenstand der folgenden Beschreibung.

Ein erstes Ausführungsbeispiel der Erfindung gemäß der zweiten vorgeschlagenen Lösung ist in Fig. 3 dargestellt. Eine Mehrkanaloptik-Bildaufnahmevorrichtung 1 der dort in einer Aufsicht auf die Bildebene gezeigten Art weist zwei Kanäle 2, 3 auf, einen ersten Kanal 2 und einen zweiten Kanal 3. Der erste Kanal 2 und der zweite Kanal 3 weisen eine teilweise Gesichtsfeldüberlappung auf. Der erste Kanal 2 und der zweite Kanal 3 weisen die gleichen Blickrichtungen auf. Auch in dieser Ausführungsform weist jeder Kanal 2, 3 der Mehrkanal-Optikbildaufnahmevorrichtung 1 eine zweidimensionale Anordnung von Detektorpixeln 4 und eine Abbildungsoptik 5, die dafür eingerichtet ist, eine Abbildung auf die Anordnung von Detektorpixeln 4 zu bewirken, auf. Allerdings handelt es sich in diesem Ausführungsbeispiel der zweiten vorgeschlagenen Lösung für jeden Kanal 2, 3 um eine Abbildungsoptik 5, die dafür eingerichtet ist, ein abzubildendes Objekt in einem Seitenverhältnis von 1:1, also unverzerrt gegenüber der Realität, abzubilden. Anstelle einer anamorphotischen Abbildungsoptik 5 sind bei dem ersten Kanal 2 eine erste zweidimensionale Anordnung von Detektorpixeln 4 und bei dem zweiten Kanal 3 eine zweite zweidimensionale Anordnung von Detektorpixeln 4 vorgesehen, wobei die erste zweidimensionale Anordnung gegenüber der zweiten zweidimensionalen Anordnung inkongruent ist. So wird statt mittels einer anamorphotischen Abbildungsoptik 5 durch eine geeignete, erfindungsgemäße Ausgestaltung der zweidimensionalen Anordnungen von Detektorpixeln 4 beim ersten Kanal 2 und beim zweiten Kanal 3 eine weitgehend entfernungsunabhängige Auflösung eines Gesamtbildes sichergestellt. Bei den Detektorpixeln 4 handelt es sich in diesem Ausführungsbeispiel erneut um in einer Aufsicht rechteckige und zudem quadratische Detektorpixel 4, die leicht herzustellen und preisgünstig sind. Es können aber auch in einer Aufsicht rechteckige und nicht-quadratische Detektorpixel 4 oder auch in einer Aufsicht runde Detektorpixel 4 vorgesehen sein, da die erfindungsgemäße Lösung nicht auf eine spezielle Gestaltung der Detektorpixel 4 beschränkt ist.

Im Folgenden werden der erste Kanal 2 und der zweite Kanal 3 gemäß der zweiten Vorgeschlagenen Lösung mit Verweis auf Fig. 3 genauer beschrieben. Die erste zweidimensionale Anordnung ist zur zweiten zweidimensionalen Anordnung ähnlich, denn die Detektorpixel 4 der ersten zweidimensionalen Anordnung sind in einer Matrix aus Pixelzeilen 6a und Pixelspalten 7a angeordnet. Es handelt sich in diesem Ausführungsbeispiel bei der ersten zweidimensionalen Anordnung um eine quadratische Matrix aus sechs Pixelzeilen 6a und sechs Pixelspalten 7a. Zudem sind die Detektorpixel 4 der zweiten zweidimensionalen Anordnung sind in einer Matrix aus Pixelzeilen 6b und Pixelspalten 7b angeordnet. Es handelt sich in diesem Ausführungsbeispiel bei der zweiten zweidimensionalen Anordnung um eine quadratische Matrix aus drei Pixelzeilen 6b und drei Pixelspalten 7b. Anders ausgedrückt, sind sowohl im ersten Kanal 2 als auch im zweiten Kanal 3 jeweils zwei benachbarte Pixelzeilen 6a, 6b parallel zueinander angeordnet und weisen eine Zeilenhöhe 8a, 8b auf und zwei benachbarte Pixelspalten 7a, 7b sind parallel zueinander angeordnet und weisen eine Spaltenbreite 9a, 9b auf, wobei die Zeilenhöhe 8a, 8b im Betrag jeweils der Spaltenbreite 9a, 9b entspricht. Dabei ist die Zeilenhöhe 8a der ersten zweidimensionalen Anordnung hinsichtlich der Zeilenhöhe 8b der zweiten zweidimensionalen Anordnung unterschiedlich und die Spaltenbreite 9a der ersten zweidimensionalen Anordnung hinsichtlich der Spaltenbreite 9b der zweiten zweidimensionalen Anordnung unterschiedlich. Jeder Detektorpixel 4 ist sowohl im ersten Kanal 2 als auch im zweiten Kanal 3 von seinen Nachbarn dem Betrag nach gleich beabstandet, so dass sich für den ersten Kanal 2 ein quadratisches Raster aus Detektorpixeln 4 bildet, das von einem quadratischen Raster des zweiten Kanals 3 unterschiedlich ist. Zwei unterschiedliche Quadrate sind einander mathematisch aber immer ähnlich. Daher sind die erste zweidimensionale Anordnung und die zweite zweidimensionale Anordnung in diesem Ausführungsbeispiel zueinander ähnlich.

Ein zweites Ausführungsbeispiel der Erfindung gemäß der zweiten vorgeschlagenen Lösung ist in Fig. 4 dargestellt. Eine Mehrkanaloptik-Bildaufnahmevorrichtung 1 der dort in einer Aufsicht auf die Bildebene gezeigten Art ist eine plenoptischen Kamera, die zusätzlich eine weitere Linse aufweist, die einer Abbildungsoptik 5 vorgeschaltet ist. Die Mehrkanaloptik-Bildaufnahmevorrichtung 1 weist *N²* Kanäle 2, 3, 10 auf, die in einer regelmäßigen *N x N* Kanalmatrix angeordnet sind, so dass alle Kanäle 2, 3, 10 zu ihren direkten Nachbarkanälen den gleichen Abstand aufweisen und nebeneinander und untereinander angeordnet sind. Alle Kanäle 2, 3, 10 bilden also zueinander parallele Kanalspalten und zueinander parallele Kanalzeilen. Exemplarisch sind ein erster Kanal 2, ein zweiter Kanal 3 und ein dritter Kanal 10 dargestellt. Der erste Kanal 2 hat eine erste zweidimensionale Anordnung von Detektorpixeln 4. Der zweite Kanal 3 hat eine zweite zweidimensionale Anordnung von Detektorpixeln 4. Der erste Kanal 2 und der zweite Kanal 3 sind unmittelbar benachbart angeordnet. Der dritte Kanal 10 hat eine dritte zweidimensionale Anordnung von Detektorpixeln 4. Die dritte zweidimensionale Anordnung ist sowohl gegenüber der ersten zweidimensionalen Anordnung als auch gegenüber der zweiten zweidimensionalen Anordnung inkongruent. Da die erste zweidimensionale Anordnung auch gegenüber der zweiten zweidimensionalen Anordnung inkongruent sind, sind alle drei zweidimensionalen Anordnungen der exemplarisch gezeigten Kanäle 2, 3, 10 inkongruent zueinander. Die verbleibenden *N²*-3 Kanäle sind so eingerichtet, dass alle *N*² Kanäle eindeutig unterscheidbare und zueinander inkongruente zweidimensionale Anordnungen von Detektorpixeln 4 aufweisen. Einige der *N*²-3 weiteren Kanäle weisen pseudozufällige Anordnungen von Detektorpixeln auf, während die verbleibenden der *N*²-3 weiteren Kanäle zweidimensionale Anordnungen mit regelmäßigen Pixelzeilen 6a, 6b, 6c und Pixelspalten 7a, 7b, 7c aufweisen. Selbstverständlich können aber auch alle der *N*²-3 weiteren Kanäle zweidimensionale Anordnungen mit regelmäßigen Pixelzeilen 6a, 6b, 6c und Pixelspalten 7a, 7b, 7c aufweisen, also nur gestalterische Abwandlungen des ersten Kanals 2, des zweiten Kanals 3 oder des dritten Kanals 10 darstellen, um eine möglichst einfache Herstellung zu ermöglichen.

Die erste zweidimensionale Anordnung von Detektorpixeln 4 ist im Ausführungsbeispiel nach Figur 4 eine Anordnung aus rechteckigen und zudem nicht-quadratischen Detektorpixeln 4. Es handelt sich um eine zweidimensionale Anordnung, in der die Detektorpixel 4 in Pixelzeilen 6a, die parallel zueinander angeordnet sind, und Pixelspalten 7a, die parallel zueinander angeordnet sind, angeordnet sind. Zudem sind die Pixelzeilen 6a und die Pixelspalten 7a senkrecht zu einander angeordnet. Die zweite zweidimensionale Anordnung von Detektorpixeln 4 ist im Ausführungsbeispiel nach Figur 4 ebenfalls eine Anordnung aus rechteckigen und zudem nicht-quadratischen Detektorpixeln 4. Es handelt sich um eine weitere zweidimensionale Anordnung, in der die Detektorpixel 4 in Pixelzeilen 6b, die parallel zueinander angeordnet sind, und Pixelspalten 7b, die parallel zueinander angeordnet sind, angeordnet sind. Zudem sind die Pixelzeilen 6b und die Pixelspalten 7b senkrecht zu einander angeordnet. Die dritte zweidimensionale Anordnung von Detektorpixeln 4 ist im Ausführungsbeispiel nach Figur 4 ebenfalls eine Anordnung aus rechteckigen und zudem nicht-quadratischen Detektorpixeln 4. Es handelt sich um eine weitere zweidimensionale Anordnung, in der die Detektorpixel 4 in Pixelzeilen 6c, die parallel zueinander angeordnet sind, und Pixelspalten 7c, die parallel zueinander angeordnet sind, angeordnet sind. Zudem sind die Pixelzeilen 6c und die Pixelspalten 7c senkrecht zu einander angeordnet. Die Detektorpixel 4 des ersten Kanals 2, des zweiten Kanals 3 und des dritten Kanals 10 sind gleich und haben somit die gleichen Detektorpixelseitenverhältnisse. Der erste Kanal 2, der zweite Kanal 3 und der dritte Kanal 10 sind also anhand ihrer jeweiligen Detektorpixelseitenverhältnisse nicht unterscheidbar, denn das Detektorpixelseitenverhältnis der Detektorpixel 4 ist von Kanal zu Kanal gleich. Das Detektorpixelseitenverhältnis beträgt für den ersten Kanal 2, für den zweiten Kanal 3 und für den dritten Kanal 10 jeweils 1:1,05 oder mehr. Es ist aber unmittelbar klar, dass in nicht gezeigten Ausführungsformen der Erfindung für zwei oder auch alle *N*² Kanäle rechteckige und zudem nicht-quadratische Detektorpixel 4 mit von Kanal zu Kanal unterschiedlichen Detektorpixelseitenverhältnissen vorhanden sein können, so dass beispielsweise die Pixelzeilen 6a, 6b, 6c und die Pixelspalten 7a, 7b, 7c zweier oder aller Kanäle hinsichtlich einer bereitgestellten Fläche optimal ausgenutzt werden, wie es in dem Ausführungsbeispiel gemäß Fig. 4 nicht der Fall ist. Dann kann beispielsweise jeder Kanal anhand seines individuellen Pixelseitenverhältnisses, das somit für keine zwei Kanäle gleich ist, eindeutig identifiziert werden. Von einander verschiedene Detektorpixelseitenverhältnisse können dabei so verstanden werden, dass das Detektorpixelseitenverhältnis eines Kanals, etwa des Kanals 2, einen Wert von 1:x und das Pixelseitenverhältnis eines anderen Kanals, etwa des Kanals 3, einen Wert von 1:y aufweist, x und y können einen Wert von 1,05 oder mehr aufweisen und sind von einander verschieden. Alternativ kann der andere Kanal ein Detektorpixelseitenverhältnisse von y:1 oder x:1 aufweisen. Ein Detektorpixelseitenverhältnis von x:1 oder y:1 bedeutet eine verglichen mit Pixeln, die das Detektorpixelseitenverhältnis 1:x oder 1:y aufweisen, um einen Winkel von ±90° oder ±270° verdrehte Anordnung der Detektorpixel.

Die Kanäle 2, 3 und/oder 10 können, anders als es dargestellt ist, auch eine gleiche Anzahl von Detektorpixeln aufweisen, und darüber hinaus eine gleiche Anzahl von Spalten und Zeilen aufweisen. Dies kann vorteilhaft sein, um eine Vergleichbarkeit und/oder Kombinierbarkeit der Bilder der einzelnen Kanäle zu erhalten. Dies kann insbesondere so erfolgen, dass die Detektorpixel 4 des ersten Kanals 2 um einen Winkel von 90° gegenüber den Detektorpixeln 4 des zweiten Kanals gedreht angeordnet sind.

Die erste zweidimensionale Anordnung hat eine Zeilenhöhe 6a und eine Spaltenbreite 7a, die sich im Betrag von der Zeilenhöhe 6a der ersten zweidimensionalen Anordnung unterscheidet. Zudem unterscheidet sich die Spaltenbreite 7a der ersten zweidimensionalen Anordnung im Betrag von einer Spaltenbreite 7b der zweiten zweidimensionalen Anordnung. Die Zeilenhöhe 6a der ersten zweidimensionalen Anordnung entspricht einer Zeilenhöhe 6b der zweiten zweidimensionalen Anordnung. Das bedeutet, dass die erste zweidimensionale Anordnung durch eine Translation und eine zusätzliche eindimensionale Streckung in die zweite zweidimensionale Anordnung überführbar ist. Es ist unmittelbar klar, dass die zweite zweidimensionale Anordnung auch in der Ansichtsebene gedreht angeordnet sein könnte, beispielsweise um 90° gedreht, so dass die erste zweidimensionale Anordnung durch eine Translation, eine zusätzliche eindimensionale Streckung und eine zusätzliche Drehung in die zweite zweidimensionale Anordnung überführbar wäre.

Die dritte zweidimensionale Anordnung hat eine Zeilenhöhe 6c und eine Spaltenbreite 7c, die sich im Betrag von der Zeilenhöhe 6c der dritten zweidimensionalen Anordnung unterscheidet. Zudem unterscheidet sich der Betrag der Zeilenhöhe 6c der dritten zweidimensionalen Anordnung sowohl vom Betrag der Zeilenhöhe 6a der ersten zweidimensionalen Anordnung als auch vom Betrag der Zeilenhöhe 6b der zweiten zweidimensionalen Anordnung. Außerdem unterscheidet sich der Betrag der Spaltenbreite 7c der dritten zweidimensionalen Anordnung sowohl vom Betrag der Spaltenbreite 7a der ersten zweidimensionalen Anordnung als auch vom Betrag der Spaltenbreite 7b der zweiten zweidimensionalen Anordnung. In dieser Ausführungsform sind also die Pixelzeilen 6a der ersten zweidimensionalen Anordnung parallel zueinander angeordnet und die Pixelspalten 7a der ersten zweidimensionalen Anordnung parallel zueinander angeordnet und die Pixelzeilen 6b der zweiten zweidimensionalen Anordnung parallel zueinander angeordnet und die Pixelspalten 7b der zweiten zweidimensionalen Anordnung parallel zueinander angeordnet, wobei die Zeilenhöhe 8a der ersten zweidimensionalen Anordnung hinsichtlich der Zeilenhöhe 8c der dritten zweidimensionalen Anordnung vom Betrag her gleich ist und die Spaltenbreite 9a der ersten zweidimensionalen Anordnung hinsichtlich der Spaltenbreite 9b der zweiten zweidimensionalen Anordnung vom Betrag her unterschiedlich. Zudem sind in dieser Ausführungsform die Pixelzeilen 6a der ersten zweidimensionalen Anordnung parallel zueinander angeordnet und die Pixelspalten 7a der ersten zweidimensionalen Anordnung parallel zueinander angeordnet und die Pixelzeilen 6c der dritten zweidimensionalen Anordnung parallel zueinander angeordnet und die Pixelspalten 7c der dritten zweidimensionalen Anordnung parallel zueinander angeordnet, wobei die Zeilenhöhe 8a der ersten zweidimensionalen Anordnung hinsichtlich der Zeilenhöhe 8c der dritten zweidimensionalen Anordnung vom Betrag her unterschiedlich ist und die Spaltenbreite 9a der ersten zweidimensionalen Anordnung hinsichtlich der Spaltenbreite 9c der dritten zweidimensionalen Anordnung vom Betrag her unterschiedlich. Es ist jedoch offensichtlich, dass statt der oder zusätzlich zur dritten zweidimensionalen Anordnung auch die zweite zweidimensionale Anordnung in Bezug auf die erste zweidimensionale Anordnung in nicht dargestellten Ausführungsformen derart ausgestaltet ist.

Bei allen Kanälen der regelmäßigen *N* x *N* Kanalmatrix gemäß Fig. 4, die ebenfalls eine derart regelmäßige Matrix aus Pixelzeilen 6a, 6b, 6c und Pixelspalten 7a, 7b, 7c aufweisen, sind die Zeilenhöhe 6 eines beliebigen Kanals und dessen Spaltenbreite 7 so gewählt, dass keine zwei Kanäle der *N*² Kanäle der Kanalmatrix die gleiche Zeilenhöhe 6 und zugleich die gleiche Spaltenbreite 7 aufweisen. So wird eine bestmögliche Abdeckung des Objektraumes erreicht und eine weitgehend entfernungsunabhängige Auflösung für die Mehrkanaloptik-Bildaufnahmevorrichtung ermöglicht.

### Bezugszeichenliste

- 1, 1p: Mehrkanaloptik-Bildaufnahmevorrichtung
- 2, 2p: Erster Kanal
- 3, 3p: Zweiter Kanal
- 4, 4p: Detektorpixel
- 5, 5p: Abbildungsoptik
- 6a, b, c: Pixelzeile
- 7a, b, c: Pixelspalte
- 8a, b, c: Zeilenhöhe
- 9a, b, c: Spaltenbreite
- 10: Dritter Kanal

- B1: Erste Blickrichtung
- B2: Zweite Blickrichtung

- R1: Erste Abbildung eines Objekts
- R2: Zweite Abbildung eines Objekts

### Referenzliste

[1] Fleet, Kanaev, Scribner, Ackerman: Scene Independent Method for Image Formation in Lenslet Array Imagers. Patentanmeldung US 20100013857A1
[2] Kartik Venkartaraman, Amandeed S. Jabbi, Robert H. Mullis: Capturing and processing of images using monolithic camera array with heterogeneous imagers, ep09763194
[3] A. Oberdörster, F. Wippermann, A. Brückner: Bildaufnahmevorrichtung und Verfahren zum Aufnehmen eines Bildes, Deutsche Patentanmeldung 102010031535.4-31
[4] Ren Ng, Marc Levoy, Mathieu Bredif: Light Field Photography with a Hand-Held Plenoptic Camera. Stanford University Computer Science Tech Report CSTR 2005-02. April, 2005
[5] T. Georgiev, A. Lumsdaine: Focused Plenoptic Camera and Rendering. Journal of Electronic Imaging, Volume 19, Issue 2, 2010.
[6] Koskinen Samu T; Alakarhu Juha H; Salmelin EERO: Lenslet camera with rotated sensors, US020100321511A1
[7] M. Ben-Ezra, Z. Lin, B. Wilburn, and W. Zhang: Penrose Pixels for Super-Resolution. IEEE Transactions on Pattern Analysis and Machine Intelligence (PAMI), Vol. 33, No. 7, pp. 1370-1383, July 2011.

## Patentansprüche

1. Mehrkanaloptik-Bildaufnahmevorrichtung (1), bei der zumindest ein erster Kanal (2) eine anamorphotische Abbildungsoptik (5) aufweist und der erste Kanal (2) zumindest mit einem zweiten Kanal (3) eine zumindest teilweise Gesichtsfeldüberlappung aufweist; **dadurch gekennzeichnet, dass**
eine Verzerrung der anamorphotischen Abbildungsoptik (5) des ersten Kanals (2) so ausgebildet ist, dass ein Abbild eines Objekts in dem ersten Kanal ein erstes Seitenverhältnis und in dem zweiten Kanal ein zweites Seitenverhältnis aufweist, wobei das erste Seitenverhältnis dem ersten Kanal eindeutig zugeordnet ist und das zweite Seitenverhältnis dem zweiten Kanal eindeutig zugeordnet ist, so dass auf jeden Kanal (2, 3) ein im Vergleich mit den anderen Kanälen unterschiedlich verzerrtes Abbild des aufzunehmenden Objekts aufgenommen wird.

2. Mehrkanaloptik-Bildaufnahmevorrichtung (1) nach Anspruch 1, wobei die anamorphotische Abbildungsoptik (5) eine oder mehrere Mikrolinsen aufweist, die dafür eingerichtet sind, ein abzubildendes Objekt in einem Seitenverhältnis 1:1,05 oder mehr auf einer Anordnung von Detektorpixeln (4) des ersten Kanals (2) verzerrt abzubilden.

3. Mehrkanaloptik-Bildaufnahmevorrichtung (1) nach Anspruch 1 oder 2,
wobei alle Kanäle (2, 3, 10) eine zweidimensionale Anordnung von Detektorpixeln (4) umfassen, die je Kanal (2, 3, 10) eine Pixelmatrix aus Pixelzeilen (6a, 6b, 6c) und Pixelspalten (7a, 7b, 7c) bilden, wobei die Pixelzeilen (6a, 6b, 6c) und Pixelspalten (7a, 7b, 7c) jedes Kanals (2, 3, 10) jeweils zueinander senkrecht angeordnet sind, **dadurch gekennzeichnet, dass**
alle Kanäle (2, 3, 10) in einer Kanalmatrix aus zueinander senkrechten Kanalzeilen und Kanalspalten angeordnet sind, und die anamorphotische Abbildungsoptik (5) dafür eingerichtet ist, ein abzubildendes Objekt auf jedem Kanal (2, 3, 10) mit einer dem jeweiligen Kanal (2, 3, 10), hinsichtlich allen anderen Kanälen (2, 3, 10), eindeutig zuordenbarer Verzerrung in einem Seitenverhältnis 1:1,05 oder mehr abzubilden.

4. Mehrkanaloptik-Bildaufnahmevorrichtung (1) nach Anspruch 1, wobei jeder Kanal (2, 3, 10) der Mehrkanaloptik-Bildaufnahmevorrichtung (1) folgendes aufweist:
- eine zweidimensionale Anordnung von Detektorpixeln (4); und
- eine Abbildungsoptik (5), die dafür eingerichtet ist, eine Abbildung auf die Anordnung von Detektorpixeln (4) zu bewirken.

5. Mehrkanaloptik-Bildaufnahmevorrichtung (1) nach Anspruch 1 oder 2, wobei sich die Gesichtsfelder mindestens zweier Kanäle (2, 3, 10) vollständig überlappen.

6. Mehrkanal-Bildaufnahmevorrichtung (1) nach einem der vorangehenden Ansprüche, bei der durch die zumindest teilweise Gesichtsfeldüberlappung eine höhere Auflösung des aus den Einzelbildern der einzelnen Kanäle zusammengesetzten Gesamtbildes erhalten wird.

7. Mehrkanal-Bildaufnahmevorrichtung (1) nach einem der vorangehenden Ansprüche, bei der sich die Gesichtsfelder zweier Kanäle zu mehr als 30% überlappen.

8. Mehrkanaloptik-Bildaufnahmeverfahren, bei dem ein aufzunehmendes Objekt mit einer Mehrkanal-Bildaufnahmevorrichtung (1) aufgenommen wird, bei der zumindest ein erster Kanal (2) eine anamorphotische Abbildungsoptik (5) aufweist und der erste Kanal (2) zumindest mit einem zweiten Kanal (3) eine zumindest teilweise Gesichtsfeldüberlappung aufweist, **dadurch gekennzeichnet, dass**
eine Verzerrung der anamorphotischen Abbildungsoptik (5) des ersten Kanals (2) so ausgebildet ist, dass ein Abbild eines Objekts in dem ersten Kanal ein erstes Seitenverhältnis und in dem zweiten Kanal ein zweites Seitenverhältnis aufweist, wobei das erste Seitenverhältnis dem ersten Kanal eindeutig zugeordnet ist und das zweite Seitenverhältnis dem zweiten Kanal eindeutig zugeordnet ist, so dass auf jeden Kanal (2, 3) ein im Vergleich mit den anderen Kanälen unterschiedlich verzerrtes Abbild des aufzunehmenden Objekts aufgenommen wird.

9. Mehrkanaloptik-Bildaufnahmeverfahren nach Anspruch 8, bei dem alle Kanäle (2, 3, 10) der Mehrkanal-Bildaufnahmevorrichtung eine zweidimensionale Anordnung von Detektorpixeln (4) umfassen, die je Kanal (2, 3, 10) eine Pixelmatrix aus Pixelzeilen (6a, 6b, 6c) und Pixelspalten (7a, 7b, 7c) bilden, wobei die Pixelzeilen (6a, 6b, 6c) und Pixelspalten (7a, 7b, 7c) jedes Kanals (2, 3, 10) jeweils zueinander senkrecht angeordnet sind, und alle Kanäle (2, 3, 10) in einer Kanalmatrix aus zueinander senkrechten Kanalzeilen und Kanalspalten angeordnet sind, und die anamorphotische Abbildungsoptik (5) dafür eingerichtet ist, ein abzubildendes Objekt auf jedem Kanal (2, 3, 10) mit einer dem jeweiligen Kanal (2, 3, 10), hinsichtlich allen anderen Kanälen (2, 3, 10), eindeutig zuordenbarer Verzerrung in einem Seitenverhältnis 1:1,05 oder mehr abzubilden.

## Claims

1. Multichannel optics image capturing apparatus (1), wherein at least a first channel (2) comprises anamorphic mapping optics (5) and the first channel (2) comprises an at least partial field of view overlap at least with a second channel (3), **characterized in that**
a distortion of the anamorphic mapping optics (5) of the first channel (2) is configured such that mapping of an object comprises a first aspect ratio in the first channel and a second aspect ratio in the second channel, wherein the first aspect ratio is uniquely allocated to the first channel and the second aspect ratio is uniquely allocated to the second channel, such that on each channel (2, 3) a mapping of the object to be captured is captured which is distorted differently when compared to the other channels.

2. Multichannel optics image capturing apparatus (1) according to claim 1, wherein the anamorphic mapping optics (5) comprises one or several microlenses that are configured to map an object to be mapped at an aspect ratio of 1:1.05 or more on an arrangement of detector pixels (4) of the first channel (2) in a distorted manner.

3. Multichannel optics image capturing apparatus (1) according to claim 1 or 2,
wherein all the channels (2, 3, 10) comprise a two-dimensional arrangement of detector pixels (4), each forming a pixel matrix of pixel rows (6a, 6b, 6c) and pixel columns (7a, 7b, 7c) per channel (2, 3, 10), wherein the pixel rows (6a, 6b, 6c) and pixel columns (7a, 7b, 7c) of each channel (2, 3, 10) are each arranged perpendicular to one another, **characterized in that**:
all the channels (2, 3, 10) are disposed in a channel matrix of channel rows and channel columns that are perpendicular to one another, and the anamorphic mapping optics (5) is configured to map an object to be mapped on each channel (2, 3, 10) with a distortion uniquely allocatable to the respective channel (2, 3, 10) with respect to all the other channels (2, 3, 10) at an aspect ratio of 1:1.05 or more.

4. Multichannel optics image capturing apparatus (1) according to claim 1, wherein
each channel (2, 3, 10) of the multichannel optics image capturing apparatus (1) comprises:
- a two-dimensional arrangement of detector pixels (4); and
- mapping optics (5) that is configured to effect mapping on the arrangement of detector pixels (4).

5. Multichannel optics image capturing apparatus (1) according to claim 1 or 2, wherein the fields of view of at least two channels (2, 3, 10) completely overlap.

6. Multichannel image capturing apparatus (1) according to one of the previous claims, wherein a higher resolution of the overall image composed of the individual images of the individual channels is obtained by the at least partial field of view overlap.

7. Multichannel image capturing apparatus (1) according to one of the previous claims, wherein the fields of view of two channels overlap by more than 30%.

8. Multichannel optics image capturing method, wherein an object to be captured is captured using a multichannel image capturing apparatus (1), wherein at least a first channel (2) comprises anamorphic mapping optics (5) and the first channel (2) comprises an at least partial field of view overlap at least with a second channel (3), **characterized in that**
a distortion of the anamorphic mapping optics (5) of the first channel (2) is configured such that mapping of an object comprises a first aspect ratio in the first channel and a second aspect ratio in the second channel, wherein the first aspect ratio is uniquely allocated to the first channel and the second aspect ratio is uniquely allocated to the second channel, such that on each channel (2, 3) a mapping of the object to be captured is captured which is distorted differently when compared to the other channels.

9. Multichannel optics image capturing method according to claim 8, wherein all the channels (2, 3, 10) of the multichannel image capturing apparatus comprise a two-dimensional arrangement of detector pixels (4), each forming a pixel matrix of pixel rows (6a, 6b, 6c) and pixel columns (7a, 7b, 7c) per channel (2, 3, 10), wherein the pixel rows (6a, 6b, 6c) and pixel columns (7a, 7b, 7c) of each channel (2, 3, 10) are each arranged perpendicular to one another, and all the channels (2, 3, 10) are disposed in a channel matrix of channel rows and channel columns that are perpendicular to one another, and the anamorphic mapping optics (5) is configured to map an object to be mapped on each channel (2, 3, 10) with a distortion uniquely allocatable to the respective channel (2, 3, 10) with respect to all other channels (2, 3, 10) at an aspect ratio of 1:1.05 or more.

## Revendications

1. Dispositif de prise de vue avec une optique à canaux multiples (1), dans lequel au moins un premier canal (2) présente une optique d'imagerie à anamorphose (5) et le premier canal (2) présente, avec au moins un deuxième canal (3), un chevauchement au moins partiel du champ de vision;
**caractérisé par le fait que**
une distorsion de l'optique d'imagerie à anamorphose (5) du premier canal (2) est conçue de sorte qu'une reproduction d'un objet présente un premier rapport d'aspect dans le premier canal et un deuxième rapport d'aspect dans le deuxième canal, où le premier rapport d'aspect est associé de manière univoque au premier canal et le deuxième rapport d'aspect est associé de manière univoque au deuxième canal, de sorte que sur chaque canal (2, 3) soit prise une image de l'objet à photographier déformée de manière différente en comparaison avec les autres canaux.

2. Dispositif de prise de vue avec une optique à canaux multiples (1) selon la revendication 1, dans lequel l'optique d'imagerie à anamorphose (5) présente une ou plusieurs microlentilles qui sont aménagées pour reproduire de manière déformée un objet à reproduire selon un rapport d'aspect de 1:1,05 ou plus sur un aménagement de pixels de détecteur (4) du premier canal (2).

3. Dispositif de prise de vue avec une optique à canaux multiples (1) selon la revendication 1 ou 2,
dans lequel tous les canaux (2, 3, 10) comportent un aménagement bidimensionnel de pixels de détecteur (4) qui forment, par canal (2, 3, 10), une matrice de pixels constituée de rangées de pixels (6a, 6b, 6c) et de colonnes de pixels (7a, 7b, 7c), dans lequel les rangées de pixels (6a, 6b, 6c) et les colonnes de pixels (7a, 7b, 7c) de chaque canal (2, 3, 10) sont disposées respectivement de manière perpendiculaire entre elles,
**caractérisé par le fait que**
tous les canaux (2, 3, 10) sont disposés dans une matrice de canaux constituée de rangées de canaux et de colonnes de canaux perpendiculaires entre elles, et l'optique d'imagerie à anamorphose (5) est aménagée pour reproduire un objet à reproduire sur chaque canal (2, 3, 10) avec une distorsion pouvant être associée au canal respectif (2, 3, 10) de manière univoque par rapport à tous les autres canaux (2, 3, 10) selon un rapport d'aspect de 1:1,05 ou plus.

4. Dispositif de prise de vue avec une optique à canaux multiples (1) selon la revendication 1, dans lequel
chaque canal (2, 3, 10) du dispositif de prise de vue avec une optique à canaux multiples (1) présente ce qui suit:
- un aménagement bidimensionnel de pixels de détecteur (4); et
- une optique d'imagerie (5) qui est aménagée pour provoquer une reproduction sur l'aménagement de pixels de détecteur (4).

5. Dispositif de prise de vue avec une optique à canaux multiples (1) selon la revendication 1 ou 2, dans lequel les champs de vision d'au moins deux canaux (2, 3, 10) se chevauchent entièrement.

6. Dispositif de prise de vue à canaux multiples (1) selon l'une des revendications précédentes, dans lequel est obtenue, par le chevauchement au moins partiel du champ de vision, une plus haute résolution de l'image globale composée des images individuelles des canaux individuels.

7. Dispositif de prise de vue à canaux multiples (1) selon l'une des revendications précédentes, dans lequel les champs de vision de deux canaux se chevauchent de plus de 30%.

8. Procédé de prise de vue avec une optique à canaux multiples, dans lequel un objet à photographier est photographié à l'aide d'un dispositif de prise de vue avec une optique à canaux multiples (1) dans lequel au moins un premier canal (2) présente une optique d'imagerie à anamorphose (5) et le premier canal (2) présente, au moins avec un deuxième canal (3), un chevauchement au moins partiel du champ de vision,
**caractérisé par le fait que**
une distorsion de l'optique d'imagerie à anamorphose (5) du premier canal (2) est conçue de sorte qu'une image d'un objet présente un premier rapport d'aspect dans le premier canal et un deuxième rapport d'aspect dans le deuxième canal, où le premier rapport d'aspect est associé de manière univoque au premier canal et le deuxième rapport d'aspect est associé de manière univoque au deuxième canal, de sorte que sur chaque canal (2, 3) soit prise une image de l'objet à photographier déformée de manière différente en comparaison avec les autres canaux.

9. Procédé de prise de vue avec une optique à canaux multiples selon la revendication 8, dans lequel tous les canaux (2, 3, 10) du dispositif de prise de vue avec une optique à canaux multiples comportent un aménagement bidimensionnel de pixels de détecteur (4) qui forment, par canal (2, 3, 10), une matrice de pixels constituée de rangées de pixels (6a, 6b, 6c) et de colonnes de pixels (7a, 7b, 7c), dans lequel les rangées de pixels (6a, 6b, 6c) et les colonnes de pixels (7a, 7b, 7c) de chaque canal (2, 3, 10) sont disposées respectivement de manière perpendiculaire entre elles, et tous les canaux (2, 3, 10) sont disposés dans une matrice de canaux constituée de rangées de canaux et de colonnes de canaux perpendiculaires entre elles, et l'optique d'imagerie à anamorphose (5) est aménagée pour reproduire un objet à reproduire sur chaque canal (2, 3, 10) avec une distorsion pouvant être associée au canal respectif (2, 3, 10) de manière univoque par rapport à tous les autres canaux (2, 3, 10) selon un rapport d'aspect de 1:1,05 ou plus.
